# EUROPÄISCHE PATENTANMELDUNG

(11) **EP 3 992 531 A2**
(43) Veröffentlichungstag der Anmeldung: **04.05.2022**
(21) Anmeldenummer: 21199371.2
(22) Anmeldetag: 28.09.2021
(51) Int. Cl.: F24C 7/08, A47J 36/00, H05B 6/12

(54) **VERFAHREN ZUM BETREIBEN EINES KOCHSYSTEMS, KOCHGESCHIRR UND STEUEREINRICHTUNG**

(30) Priorität: 28.10.2020 DE 102020128259; 28.10.2020 BE 202005761
(71) Anmelder: Miele & Cie. KG, 33332 Gütersloh (DE)
(72) Erfinder: Niermann, Franziska, 33739 Bielefeld (DE); Gehring, Nils Marius, 33739 Bielefeld (DE); Metz, Thomas, 32257 Bünde (DE)

(57) **Zusammenfassung**

Verfahren zum Betreiben eines Kochsystems (1) umfassend ein Kochgeschirr (10), eine Steuereinrichtung (50) und eine Kochfeldeinrichtung (100), wobei die Kochfeldeinrichtung (100) eine Aufstellfläche (101) und eine Heizeinrichtung (102) umfasst, wobei das Kochgeschirr (10) einen Boden (11) und eine Wandung (12) umfasst, wobei ein Temperatursensor (13) dem Boden (11) zugeordnet ist und zwei weiterer Temperatursensoren (14, 15) der Wandung (12) zugeordnet sind, wobei ein erster der Wandung (12) zugeordnete Temperatursensor (14) in einer untersten vorbestimmten Höhe (16) als unterster Temperatursensor (14) und ein zweiter der Wandung (12) zugeordnete Temperatursensor (15) in einer obersten vorbestimmten Höhe (17) als oberster Temperatursensor (15) vorgesehen ist. Dabei wird bei einem solchen Verfahren, das Kochgeschirrs (10) durch einen Leistungsverlauf der Heizeinrichtung (102) beheizt, um eine vorbestimmte Temperatur (TWU1) zu erreichen und die Leistung (L) der Heizeinrichtung (102) reduziert, wenn ein vorbestimmter Schwellwert (STW) einer Temperatur (TW) überschritten wird. Dabei werden bei einem weiteren solchen Verfahren eine Aufheizphase und eine Haltephase ausgeführt, wobei zur Regelung der Leistung (L) der Heizeinrichtung (102) zeitweise eine Temperatur (TB, TW) am Boden (11) und/oder an der Wandung(12) genutzt wird. Das erfindungsgemäße Kochgeschirr (10) und die erfindungsgemäße Steuereinrichtung (50) sind zur Verwendung in einem Kochsystem (1) zur Durchführung eines erfindungsgemäßen Verfahrens geeignet und ausgebildet.

## Beschreibung

Die vorliegende Erfindung betrifft zwei Verfahren zum Betreiben eines Kochsystems umfassend wenigstens ein Kochgeschirr, wenigstens eine Steuereinrichtung und wenigstens eine Kochfeldeinrichtung, wobei die Kochfeldeinrichtung wenigstens eine Aufstellfläche zum Aufstellen von Kochgeschirr und wenigstens eine Heizeinrichtung zum Beheizen von Kochgeschirr umfasst, wobei das Kochgeschirr wenigstens einen Boden und wenigstens eine Wandung umfasst, wobei durch den Boden und die Wandung wenigstens ein Aufnahmevolumen begrenzt wird, wobei wenigstens ein Temperatursensor dem Boden zugeordnet ist und wenigstens zwei weiterer Temperatursensoren der Wandung zugeordnet sind, wobei ein erster der Wandung zugeordnete Temperatursensor in einer untersten vorbestimmten Höhe als unterster Temperatursensor und ein zweiter der Wandung zugeordnete Temperatursensor in einer obersten vorbestimmten Höhe als oberster Temperatursensor vorgesehen ist. Die vorliegende Erfindung betrifft zudem ein Kochgeschirr zur Durchführung eines erfindungsgemäßen Verfahrens und eine Steuereinrichtung zur Verwendung in einem Kochsystem und/oder in einem Kochgeschirr zur Durchführung eines erfindungsgemäßen Verfahrens.

Automatisierte und teilautomatisierte Programme sowie unterstützende Funktionen sind bei einer Vielzahl von Haushaltgeräten bekannt geworden. Insbesondere Gargeräte weisen oft verschiedene solcher automatischer und/oder unterstützender Programme bzw. Funktionen auf, um einem Benutzer bei der Zubereitung von Speisen zu helfen und/oder einen solchen Prozess weitgehend automatisch bzw. selbstständig zu überwachen und/oder zu steuern. So kann beispielsweise bei Gargeräten, wie etwa einem Backofen, oft ein Automatikprogramm für die Zubereitung eines bestimmten Lebensmittel ausgewählt werden, woraufhin der Garprozess von verschiedene Verfahren und Systeme überwacht bzw. optimal ausgeführt wird. Häufig wird hierbei auch das Gargut automatisch erkannt, sodass eine automatische Einstellung eines geeigneten Garprogramms erfolgt.

Vorteilhaft wäre es, wenn ein Benutzer auch bei dem Erwärmen bzw. Erhitzen von Speisen in einem auf einem Kochfeld aufstehenden Kochgeschirr wie z. B. einem Topf, einer Pfanne oder dergleichen unterstützt werden könnte oder wenn sogar vollkommen automatisch ein möglichst rasches Erhitzen eines Lebensmittel in dem Kochgeschirr ohne Überkochen und/oder Anbrennen erfolgen würde.

Es ist daher die Aufgabe der vorliegenden Erfindung, einem Benutzer ein besonders komfortables Erhitzen eines Lebensmittelns in einem Kochgeschirr zu ermöglichen.

Diese Aufgabe wird gelöst durch die Verfahren zum Betreiben eines Kochsystems mit den Merkmalen der Anspruche 1 und 4, durch ein Kochgeschirr mit den Merkmalen des Anspruchs 16 und durch eine Steuereinrichtung mit den Merkmalen des Anspruchs 18. Bevorzugte Weiterbildungen der Erfindung sind Gegenstand der Unteransprüche. Weitere Vorteile und Merkmale der Erfindung ergeben sich aus den Ausführungsbeispielen.

Das erfindungsgemäße Verfahren eignet sich zum Betreiben eines Kochsystems umfassend wenigstens ein Kochgeschirr, wenigstens eine Steuereinrichtung und wenigstens eine Kochfeldeinrichtung. Dabei umfasst die Kochfeldeinrichtung wenigstens eine Aufstellfläche zum Aufstellen von Kochgeschirr und wenigstens eine Heizeinrichtung zum Beheizen von Kochgeschirr, wobei das Kochgeschirr wenigstens einen Boden und wenigstens eine Wandung umfasst, wobei durch den Boden und die Wandung wenigstens ein Aufnahmevolumen begrenzt wird. Weiterhin sind wenigstens ein Temperatursensor dem Boden und wenigstens zwei weitere Temperatursensoren der Wandung zugeordnet, wobei ein erster der Wandung zugeordneter Temperatursensor in einer untersten vorbestimmten Höhe als unterster Temperatursensor und ein zweiter der Wandung zugeordneter Temperatursensor in einer obersten vorbestimmten Höhe als oberster Temperatursensor vorgesehen ist. Dabei werden die folgenden Schritte in geeigneter Anzahl und Reihenfolge ausgeführt: Beheizen des Kochgeschirrs durch einen Leistungsverlauf der Heizeinrichtung, wobei auf eine vorbestimmte Temperatur an dem wenigstens einen dem Boden zugeordneten Temperatursensor geregelt wird, um an dem untersten der Wandung zugeordnete Temperatursensor eine vorbestimmte Temperatur zu erreichen. Reduzieren der Leistung der Heizeinrichtung, wenn ein vorbestimmter Schwellwert einer Temperatur an wenigstens einem der Wandung zugeordneten Temperatursensor überschritten wird.

Das erfindungsgemäße Verfahren zum Betreiben eines Kochsystems kann insbesondere in Verbindung mit einem Kochgeschirr und einer Steuereinrichtung durchgeführt werden wie sie weiter unten in dieser Anmeldung ausgeführt sind.

Vorzugsweise wird die Temperatur an dem wenigstens einen dem Boden zugeordneten Temperatursensor durch eine geeignete Anpassung bzw. Reduzierung der Leistung der Heizeinrichtung reduziert, wenn ein vorbestimmter Schwellwert einer Temperatur an wenigstens einem der Wandung zugeordneten Temperatursensor überschritten wird.

In vorteilhaften Weiterbildungen ist die Höhe, in der der unterste der Wandung zugeordnete Temperatursensor angeordnet ist, von einem Lebensmittel bedeckt bzw. die Füllhöhe des Kochgeschirrs ist, höher als die Höhe, in der der unterste der Wandung zugeordnete Temperatursensor angeordnet ist. Dabei ist die Füllhöhe insbesondere die Höhe, bis zu welcher das Kochgeschirr befüllt ist bzw. die Wandung des Kochgeschirrs mit einem Lebensmittel bedeckt ist.

Bevorzugt ist die Höhe in der der oberste der Wandung zugeordnete Temperatursensor angeordnet ist nicht von einem Lebensmittel bedeckt bzw. die Füllhöhe des Kochgeschirrs ist geringer als die Höhe in der der oberste der Wandung zugeordneten Temperatursensor angeordnet ist.

In zweckmäßigen Weiterbildungen sind das Kochgeschirr und/oder die Kochfeldeinrichtung dazu geeignet und ausgebildet, miteinander und/oder mit der Steuereinrichtung zu kommunizieren bzw. Informationen wie insbesondere Temperaturdaten der Temperatursensoren auszutauschen. Dabei weisen das Kochgeschirr und/oder die Kochfeldeinrichtung und/oder die Steuereinrichtung wenigstens eine geeignete Kommunikationseinrichtung auf, um insbesondere einen drahtlosen Austausch von Informationen zu ermöglichen.

Bevorzugt werden die Temperaturdaten von der Kommunikationseinrichtung des Kochgeschirrs an die Steuereinrichtung und/oder die Kochfeldeinrichtung gesendet und von einer von der Steuereinrichtung und/oder der Kochfeldeinrichtung umfassten Auswerteeinrichtung ausgewertet, um z. B. zu erkennen, ob ein vorbestimmter Schwellwert an einem der Temperatursensoren überschritten wurde. Je nach Aufgabe und Ausgestaltung kann aber eine Auswerteeinrichtung, welche z. B. erkennt, ob ein Schwellwert überschritten wurde, auch insbesondere von dem Kochgeschirr umfasst sein. Vorzugsweise bilden in einer solchen Ausführung die Kommunikationseinrichtung und die Auswerteeinrichtung eine Baugruppe.

Das erfindungsgemäße Verfahren hat viele Vorteile. Ein erheblicher Vorteil ist, dass während des Beheizens des Kochgeschirrs eine Temperatur an wenigstens einem der Wandung zugeordneten Temperatursensoren ermittelt wird und dass, wenn ein vorbestimmter Schwellwert überschritten wird, die Leistung der Heizeinrichtung reduziert wird. Hierdurch kann ein Kochgeschirr bzw. ein sich darin befindliches Lebensmittel in kürzester Zeit weitgehend automatisch auf eine vorbestimmte, insbesondere hohe Temperatur nahe des Siedetemperatur des Lebensmittels aufgeheizt und/oder auch auf einer solchen Temperatur über einen längeren Zeitraum gehalten werden, ohne dabei überzukochen. Auch kann ein Anbrennen des Lebensmittels weitgehend verhindert werden, da während des erfindungsgemäßen Verfahrens sowohl die Temperatur am Boden des Kochgeschirrs als auch die Temperatur an der Wandung des Kochgeschirrs überwacht bzw. auf diese geregelt wird.

Ein solches Verfahren ist für einen Benutzer besonders komfortabel, da ein Benutzer nicht permanent das Erhitzen eines in dem Kochgeschirr befindlichen Lebensmittels bzw. Garguts überwachen muss, sondern dieser Prozess weitgehend automatisch oder sogar automatisch gesteuert wird bzw. autonom abläuft.

Dadurch, dass das erfindungsgemäße Verfahren ein Überkochen und/oder Anbrennen eines in dem Kochgeschirr befindlichen Lebensmittels weitgehend vermeidet, wird außerdem eine Verschmutzung der Aufstellfläche sowie des Benutzers durch aus dem Kochgeschirr spritzendes und überlaufendes Lebensmittel vermieden. Auch eine unangenehme Geruchsentwicklung durch in dem Kochgeschirr und/oder auf der Aufstellfläche anbrennende Lebensmittel wird weitgehend vermieden. Dies macht das erfindungsgemäße Verfahren noch vorteilhafter und insbesondere benutzerfreundlich.

Bevorzugt wird die Leistung der Heizeinrichtung reduziert, wenn der vorbestimmte Schwellwert einer Temperatur an wenigstens einem der Wandung zugeordneten Temperatursensoren überschritten wird, welcher die Temperatur des in dem Kochgeschirr aufsteigenden Dampfes misst.

Vorzugsweise ist der die Temperatur des in dem Kochgeschirr aufsteigenden Dampfes messende Temperatursensor in einer Höhe angeordnet, welche sich oberhalb der maximal vorgesehenen Füllhöhe des Kochgeschirrs befindet. Je nach Aufgabe und Ausgestaltung ist es auch möglich, dass die aktuelle Füllhöhe des Kochgeschirrs insbesondere automatisch erfasst bzw. erkannt wird und die Temperatur des in dem Kochgeschirr aufsteigenden Dampfes vorzugsweise an einem und/oder mehreren Temperatursensoren oberhalb der erkannten Füllhöhe ermittelt bzw. gemessen wird.

Dabei ist die Füllhöhe insbesondere die Höhe, bis zu welcher das Kochgeschirr befüllt ist bzw. die Wandung des Kochgeschirrs mit einem Lebensmittel bedeckt ist.

Besonders bevorzugt ist der die Temperatur des in dem Kochgeschirr aufsteigenden Dampfes messende Temperatursensor derjenige Temperatursensor, für welchen die Differenz aus seiner Anordnungshöhe und der Füllhöhe des Kochgeschirrs den geringsten positiven Wert aufweist.

Dabei ist Anordnungshöhe insbesondere die Höhe, in der ein der Wandung zugeordneter Temperatursensor an dem Kochgeschirr angeordnet ist.

In zweckmäßigen Weiterbildungen ist der vorbestimmte Schwellwert ein Wert in einem Temperaturbereich um die Siedetemperatur von Wasser, also eine Temperatur um etwa 100°C. Der vorbestimmte Schwellwert hat insbesondere einen Wert zwischen 90°C und 100°C, vorzugsweise zwischen 95°C und 100 °C und besonders bevorzugt von 97,25°C. Je nach sich im Kochgeschirr befindlichen Lebensmittel bzw. Gargut kann der Schwellwert vorzugsweise auch einen anderen Wert besitzen bzw. diesem Lebensmittel, insbesondere dessen Siedepunkt unter Raumbedingungen angepasst werden.

Bevorzugt ist wenigstens eine Füllstanderkennungseinrichtung vorgesehen, welche automatisch die Füllhöhe des Kochgeschirrs erkennt.

Insbesondere erkennt bzw. bestimmt die Füllstanderkennungseinrichtung bis zu welcher Höhe die Wandung des Kochgeschirrs mit einem Lebensmittel weitgehend bedeckt ist.

Vorzugsweise ist die Füllstanderkennungseinrichtung vom Kochgeschirr umfasst.

In vorteilhaften Weiterbildungen wird der die Temperatur des in dem Kochgeschirr aufsteigenden Dampfes messende Temperatursensor mithilfe der Füllstanderkennungseinrichtung automatisch erkannt bzw. bestimmt. Insbesondere durch Bildung der Differenz aus der Höhen bzw. Anordnungshöhe von wenigstens einem der Temperatursensoren und der durch die Füllstanderkennungseinrichtung erkannten Füllhöhe des Kochgeschirrs wird der Temperatursensor zur Messung der Dampftemperatur bestimmt.

Ein weiteres erfindungsgemäßes Verfahren eignet sich zum Betreiben eines Kochsystems umfassend wenigstens ein Kochgeschirr, wenigstens eine Steuereinrichtung und wenigstens eine Kochfeldeinrichtung, wobei die Kochfeldeinrichtung wenigstens eine Aufstellfläche zum Aufstellen von Kochgeschirr und wenigstens eine Heizeinrichtung zum Beheizen von Kochgeschirr umfasst. Das Kochgeschirr umfasst wenigstens einen Boden und wenigstens eine Wandung, wobei durch den Boden und die Wandung wenigstens ein Aufnahmevolumen begrenzt wird, wobei wenigstens ein Temperatursensor dem Boden zugeordnet ist und wenigstens zwei weiterer Temperatursensoren der Wandung zugeordnet sind. Dabei sind ein erster der Wandung zugeordneter Temperatursensor in einer untersten vorbestimmten Höhe als unterster Temperatursensor und ein zweiter der Wandung zugeordneter Temperatursensor in einer obersten vorbestimmten Höhe als oberster Temperatursensor vorgesehen. Weiterhin wird wenigstens eine Aufheizphase, in der durch einen geeigneten Leistungsverlauf der Heizeinrichtung auf eine vorbestimmte Temperatur an wenigstens einem Temperatursensor eingestellt, und wenigstens eine Haltephase, in der diese vorbestimmte Temperatur wenigstens zeitweise im Wesentlichen konstant gehalten wird, ausgeführt. Dabei wird zur Regelung der Leistung der Heizeinrichtung während der Aufheiz- und der Haltephase wenigstens zeitweise eine Temperatur genutzt, welche von dem wenigstens einen dem Boden zugeordneten Temperatursensor und/oder wenigstens einer der der Wand zugeordneten Temperatursensoren gemessen wird.

Auch das weitere erfindungsgemäße Verfahren zum Betreiben eines Kochsystems kann insbesondere in Verbindung mit einem Kochgeschirr und einer Steuereinrichtung durchgeführt werden, wie sie in dieser Anmeldung ausgeführt sind.

In zweckmäßigen Weiterbildungen wird in der Haltephase die vorbestimmte Temperatur wenigstens zeitweise, insbesondere während der gesamten Haltephase im Wesentlichen konstant gehalten.

Vorzugsweise ist die Höhe, in der der unterste der Wandung zugeordnete Temperatursensor angeordnet ist, von einem Lebensmittel bedeckt bzw. die Füllhöhe des Kochgeschirrs ist höher als die Höhe in der der unterste der Wandung zugeordneten Temperatursensor angeordnet ist.

Besonders bevorzugt ist die Höhe, in der der oberste der Wandung zugeordnete Temperatursensor angeordnet ist, nicht von einem Lebensmittel bedeckt bzw. die Füllhöhe des Kochgeschirrs ist geringer als die Höhe in der der oberste der Wandung zugeordneten Temperatursensor angeordnet ist.

In zweckmäßigen Weiterbildungen sind das Kochgeschirr und/oder die Kochfeldeinrichtung dazu geeignet und ausgebildet, miteinander und/oder mit der Steuereinrichtung zu kommunizieren bzw. Informationen wie insbesondere Temperaturdaten der Temperatursensoren auszutauschen. Dabei weisen das Kochgeschirr und/oder die Kochfeldeinrichtung und/oder die Steuereinrichtung wenigstens eine geeignete Kommunikationseinrichtung auf, um insbesondere einen drahtlosen Austausch von Informationen zu ermöglichen.

Bevorzugt werden die Temperaturdaten von der Kommunikationseinrichtung des Kochgeschirrs an die Steuereinrichtung und/oder die Kochfeldeinrichtung gesendet und von einer von der Steuereinrichtung und/oder der Kochfeldeinrichtung umfassten Auswerteeinrichtung ausgewertet. Je nach Aufgabe und Ausgestaltung kann aber eine Auswerteeinrichtung auch insbesondere vom Kochgeschirr umfasst sein. Vorzugsweise bilden in einer solchen Ausführung die Kommunikationseinrichtung und die Auswerteeinrichtung eine Baugruppe.

Das erfindungsgemäße Verfahren hat viele Vorteile. Ein erheblicher Vorteil ist, dass wenigstens eine Aufheizphase, in der auf eine vorbestimmte Temperatur eingestellt wird, und wenigstens eine Haltephase, in der diese vorbestimmte Temperatur wenigstens zeitweise gehalten wird, ausgeführt wird, wobei zur Regelung wenigstens eine Temperatur an dem wenigstens einen dem Boden zugeordneten Temperatursensor und/oder an wenigstens einem der Wandung zugeordneten Temperatursensoren genutzt wird. Dadurch, dass sowohl in der Aufheiz- als auch in der Haltephase die Temperatur an wenigstens einer Stelle des Kochgeschirrs ermittelt bzw. überwacht wird, kann das Beheizen des Kochgeschirrs besonders zuverlässig gesteuert und ein Anbrennen und/oder Überkochen von einem im Kochgeschirr befindlichen Lebensmittel weitgehen vermieden werden. Dies macht das erfindungsgemäße Verfahren für einen Benutzer besonders komfortabel, da ein Benutzer nicht permanent das Erhitzen eines in dem Kochgeschirr befindlichen Lebensmittels bzw. Garguts überwachen muss, sondern dieser Prozess weitgehend automatisch oder sogar automatisch gesteuert wird bzw. sogar weitgehend autonom abläuft.

Außerdem weist das hier beschriebene weitere erfindungsgemäße Verfahren alle Vorteile des in dieser Anmeldung zuerst beschriebenen Verfahrens zum Betreiben eines Kochsystems auf.

Bevorzugt wird während der Aufheizphase auf eine vorbestimmte Temperatur an dem wenigstens einen dem Boden zugeordneten Temperatursensor geregelt.

Vorzugsweise wird während der Aufheizphase auf eine vorbestimmte Temperatur von insbesondere 50°C, 60°C, 70°C, 80°C oder mehr, vorzugsweise von 90°C, bevorzugt von 100°C, besonders bevorzugt von 110°C, und ganz besonders bevorzugt von 120°C und insbesondere von 130°C oder mehr an dem wenigstens einen dem Boden zugeordneten Temperatursensor geregelt.

In vorteilhaften Weiterbildungen wird während der Aufheizphase auf eine vorbestimmte Temperatur an dem dem Boden zugeordneten Temperatursensor geregelt, bis an dem untersten der Wandung zugeordneten Temperatursensor eine vorbestimmte Temperatur erreicht wird.

In zweckmäßigen Weiterbildungen wird eine solche vorbestimmte Temperatur an dem untersten der Wandung zugeordnete Temperatursensor von einem Benutzer als eine Zieltemperatur eingestellt. Vorzugsweise wird eine solche Zieltemperatur durch Betätigung eines von dem Kochgeschirr umfassten Bedienelementes eingestellt bzw. ausgewählt. Je nach Aufgabe und Ausführung kann die vorbestimmte Temperatur an dem untersten der Wandung zugeordnete Temperatursensor bzw. eine Zieltemperatur auch automatisch, insbesondere in Abhängigkeit von einem erkannten oder eingestellten Lebensmittel bzw. Gargut gesetzt werden.

Bevorzugt wird während der Aufheizphase eine vorbestimmte Temperatur an dem untersten der Wandung zugeordneten Temperatursensor eingestellt.

Besonders bevorzugt wird während der Aufheizphase eine vorbestimmte Temperatur von insbesondere 50°C, vorzugsweise von 60°C, vorteilhafterweise von 70°C, bevorzugt von 80°C, besonders bevorzugt von 90°C, insbesondere vorzugsweise von 95°C ganz besonders bevorzugt von 100°C, insbesondere bevorzugt von 110°C und weitgehend bevorzugt von 120°C oder mehr an dem untersten der Wandung zugeordneten Temperatursensor eingestellt.

Vorzugsweise wird während der Aufheizphase das Kochgeschirr bzw. ein sich darin befindliches Lebensmittel so beheizt, dass ein erster Schwellwert einer zeitlichen Temperaturänderung an dem untersten der Wandung zugeordneten Temperatursensor nicht unterschritten und/oder ein zweiter Schwellwert einer zeitlichen Temperaturänderung an dem untersten der Wandung zugeordneten Temperatursensor nicht überschritten wird.

In vorteilhaften Weiterbildungen wird während der Haltephase wenigstens zeitweise eine vorbestimmte Temperatur an dem untersten der Wandung zugeordneten Temperatursensor im Wesentlichen konstant gehalten.

Vorzugsweise wird während der Haltephase wenigstens zeitweise die vorbestimmte Temperatur an dem untersten der Wandung zugeordneten Temperatursensor im Wesentlichen konstant gehalten, welche während der Aufheizphase eingestellt wurde. Dabei ist eine im Wesentlichen konstante Temperatur eine Temperatur, welche in einem Temperaturbereich von insbesondere ± 0,5 °C oder weniger, besonders bevorzugt von ± 1°C, bevorzugt ± 2°C und vorzugsweise von ± 3°C oder mehr um die vorbestimmte Temperatur bzw. Zieltemperatur liegt.

Bevorzugt wird während der Haltephase eine vorbestimmte Temperatur an dem untersten der Wandung zugeordneten Temperatursensor im Wesentlichen solange konstant gehalten, bis ein Benutzer das Verfahren beendet und/oder bis eine von einem Benutzer und/oder einem Ablaufprogramm voreingestellte Zeit abgelaufen ist.

Besonders bevorzugt wird während der Haltephase die Leistung der Heizeinrichtung reduziert, wenn ein vorbestimmter Schwellwert einer zeitlichen Änderung der Temperatur an dem obersten der Wandung zugeordneten Temperatursensor überschritten wird.

Vorzugsweise wird während der Haltephase die Temperatur an dem wenigstens einen dem Boden zugeordneten Temperatursensor durch eine geeignete Anpassung der Leistung der Heizeinrichtung reduziert, wenn ein vorbestimmter Schwellwert einer zeitlichen Änderung der Temperatur an dem obersten der Wandung zugeordneten Temperatursensor überschritten wird.

In vorteilhaften Weiterbildungen ist der Schwellwert abhängig von der Leistung der Heizeinrichtung und/oder der Temperatur an dem obersten der Wandung zugeordneten Temperatursensor und/oder der Temperatur an dem untersten der Wandung zugeordneten Temperatursensor.

Bevorzugt sind mehr als zwei der Wandung des Kochgeschirrs zugeordnete Temperatursensoren vorgesehen, an denen eine Temperatur gemessen wird.

Insbesondere sind drei oder vier, bevorzugt auch fünf oder sechs, besonders bevorzugt sieben oder acht und ganz besonders bevorzugt mehr als acht Temperatursensoren der Wandung zugeordnet.

Vorzugsweise sind die mehr als zwei der Wandung zugeordneten Temperatursensoren zwischen dem untersten und dem obersten der Wandung zugeordneten Temperatursensoren angeordnet.

Bevorzugt wird die Leistung der Heizeinrichtung durch einen Leistungsgrenzwert auf eine maximale Leistung begrenzt.

Insbesondere wird die Leistung der Heizeinrichtung dann durch einen Leistungsgrenzwert auf eine maximale Leistung begrenzt, wenn kein Deckel auf dem Kochgeschirr angeordnet ist.

In zweckmäßigen Weiterbildungen ist der Leistungsgrenzwert der Heizeinrichtung abhängig von der Temperatur an wenigstens einem dem Boden zugeordneten Temperatursensor.

Besonders bevorzugt wird die Heizeinrichtung abgeschaltet, wenn die Temperatur an wenigstens einem dem Boden zugeordneten Temperatursensor einen Grenzwertwert überschreitet. Bevorzugt wird durch das Abschalten der Heizeinrichtung bei Überschreiten eins Grenzwertes an wenigstens einem dem Boden zugeordneten Temperatursensor ein Leerkochen des Kochgeschirrs, also ein fortdauerndes Erhitzen eines ungefüllten bzw. leeren Kochgeschirrs, vermieden.

Vorzugsweise wird durch Betätigung wenigstens eines am Kochgeschirr aufgenommenen Bedienelementes das Verfahren gestartet und/oder beendet.

In zweckmäßigen Weiterbildungen wird durch Betätigung wenigstens eines an dem Kochgeschirr aufgenommenen und/oder dem Kochgeschirr zugeordneten Bedienelementes wenigstens ein Temperaturwert ausgewählt, auf welchen die Temperatur an dem wenigstens einen dem Boden zugeordneten Temperatursensor und/oder die Temperatur an wenigstens einem der Wandung zugeordneten Temperatursensor durch Einstellen einer geeigneten Leistung der Heizeinrichtung während der Aufheizphase geregelt wird.

Vorzugsweise wird durch Betätigung wenigstens eines an dem Kochgeschirr aufgenommenen und/oder dem Kochgeschirr zugeordneten Bedienelementes wenigstens ein Temperaturwert ausgewählt, auf welchen die Temperatur an dem wenigstens einen dem Boden zugeordneten Temperatursensor und/oder die Temperatur an wenigstens einem der Wandung zugeordneten Temperatursensor durch Einstellen einer geeigneten Leistung der Heizeinrichtung während der Haltephase geregelt wird.

Besonders bevorzugt wird eine gewünschte Zieltemperatur für ein sich im Kochgeschirr befindliches Lebensmittel ausgewählt.

Dabei entspricht die Zieltemperatur für das sich im Kochgeschirr befindliche Lebensmittel insbesondere der Temperatur, welche an dem untersten der Wandung zugeordnetem Temperatursensor ermittelt wird.

Vorzugsweise sind wenigstens zwei Bedienelemente zur Auswahl von wenigstens zwei unterschiedlichen Zieltemperaturen eines sich in dem Kochgeschirr befindlichen Lebensmittels vorgesehen.

Bevorzugt sind durch das Bedienelement wenigstens zwei der folgenden Temperaturwerte bzw. Zieltemperaturen einstellbar bzw. auswählbar: insbesondre ein Temperaturwert von etwa 50°C und/oder bevorzugt von etwa 60°C und/oder insbesondere vorzugsweise von etwa 70°C und/oder vorteilhafterweise von etwa 80°C und/oder vorzugsweise von etwa 90°C und/oder insbesondere vorzugsweise von 95°C, und/oder bevorzugt von 100°C, und/oder besonders bevorzugt von 110°C und/oder ganz besonders bevorzugt von 120°C.

Das erfindungsgemäße Kochgeschirr umfasst wenigstens einen Boden und wenigstens eine Wandung, wobei durch den Boden und die Wandung wenigstens ein Aufnahmevolumen begrenzt wird, wobei wenigstens ein Temperatursensor dem Boden zugeordnet ist und wenigstens zwei weiterer Temperatursensoren der Wandung zugeordnet sind, wobei ein erster der Wandung zugeordneter Temperatursensor in einer untersten vorbestimmten Höhe als unterster Temperatursensor und ein zweiter der Wandung zugeordneter Temperatursensor in einer obersten vorbestimmten Höhe als oberster Temperatursensor vorgesehen ist. Dabei ist wenigstens eine Steuereinrichtung und/oder eine Wirkverbindung zu einer Steuereinrichtung umfasst, welche zur Durchführung wenigstens eines Verfahrens geeignet und ausgebildet ist, wie sie zuvor beschrieben wurden.

Das erfinderische Kochgeschirr kann insbesondere in Verbindung mit einer Steuereinrichtung und einem der erfindungsgemäßen Verfahren verwendet werden wie sie in dieser Anmeldung ausgeführt sind.

Unter der Höhe, in welcher die der Wandung zugeordneten Temperatursensoren angeordnet sind, ist insbesondere der Abstand in Bezug auf den Boden des Kochgeschirrs zu verstehen. Vorzugsweise weist das Kochgeschirr wenigstens eine Kommunikationseinrichtung auf, um Informationen wie insbesondere Temperaturdaten der Temperatursensoren mit der Kochfeldeinrichtung und/oder der Steuereinrichtung auszutauschen. Dabei erfolgt der Austausch von Informationen insbesondere drahtlos.

Bevorzugt werden die Temperaturdaten über eine geeignete Kommunikationseinrichtung mit der Kochfeldeinrichtung und/oder der Steuereinrichtung ausgetauscht und dort von einer Auswerteeinrichtung ausgewertet. Je nach Aufgabe und Ausgestaltung kann aber auch das Kochgeschirr eine solche Auswerteeinrichtung umfassen.

In zweckmäßigen Weiterbildungen umfasst das Kochgeschirr die Steuereinrichtung. Vorzugsweise sind die Temperatursensoren an der Außenseite der das Aufnahmevolumen begrenzenden Wandung des Kochgeschirrs aufgenommen. Sie können aber auch insbesondere an der Innenseite der das Aufnahmevolumen begrenzenden Wandung des Kochgeschirrs aufgenommen sein. Auch können die Temperatursensoren bevorzugt in einem Hohlraum bzw. in einem Zwischenraum, welcher von einer inneren und einer äußeren Wandung gebildet wird, angeordnet sein. Insbesondere sind in einer solchen Anordnung die Temperatursensoren in der Wandung bzw. in dem Boden integriert. Vorzugsweise können die Temperatursensoren auch an der Außenseite einer äußeren Wandung aufgenommen sein. Je nach Aufgabe und Ausgestaltung sind aber auch insbesondere Kombinationen aus obigen Anordnungen möglich. Die Temperatursensoren können vorzugsweise auch abnehmbar ausgestaltet sein.

Bevorzugt ist der wenigstens eine dem Boden zugeordnete Temperatursensor weitgehend mittig, insbesondere im Zentrum der Bodenfläche angeordnet. Er kann aber auch bevorzugt im inneren Drittel oder insbesondere im mittleren Drittel oder besonders bevorzugt im äußeren Drittel des Bodendurchmessers bzw. der dadurch bestimmten Fläche angeordnet sein. Bei mehreren dem Boden zugeordneten Temperatursensoren sind auch vorzugsweise Kombinationen möglich.

In vorteilhaften Weiterbildungen ist der in einer untersten vorbestimmten Höhe angeordnete Temperatursensor insbesondere im unteren Drittel, vorzugsweise im untersten Viertel, bevorzugt im unteren Fünftel, besonders bevorzugt im unteren Sechstel, ganz besonders bevorzugt im unteren Siebtel, und insbesondere im unteren Achtel oder in einer noch geringeren Höhe der vertikalen Erstreckung der Wandung angeordnet.

Vorzugsweise ist der in einer obersten vorbestimmten Höhe angeordnete Temperatursensor insbesondere im oberen Drittel, vorzugsweise im oberen Viertel, bevorzugt im oberen Fünftel, besonders bevorzugt im oberen Sechstel, ganz besonders bevorzugt im oberen Siebtel, und insbesondere im oberen Achtel oder in einer noch größeren Höhe der vertikalen Erstreckung der Wandung angeordnet.

Bevorzugt ist der in einer obersten vorbestimmten Höhe angeordnete Temperatursensor in einer Höhe oberhalb der maximal vorgesehenen Füllhöhe des Kochgeschirrs angeordnet.

Vorzugsweise sind die wenigstens zwei der Wandung des Kochgeschirrs zugeordneten Temperatursensoren entlang einer zum Boden normalen Linie angeordnet.

In vorteilhaften Weiterbildungen sind mehr als zwei Temperatursensoren der Wandung zugeordnet, welche bevorzugt in gleichmäßigen Abständen von insbesondere etwa 1 cm oder weniger, vorzugsweise von etwa 1,5 cm und bevorzugt von etwa 2 cm oder mehr über die vertikale Erstreckung der Wandung verteilt angeordnet sind. Insbesondere sind die mehr als zwei Temperatursensoren zwischen dem auf einer untersten vorbestimmten Höhe und dem auf einer obersten vorbestimmten Höhe angeordneten Temperatursensoren angeordnet.

Insbesondere sind drei, vorzugsweise vier, besonders bevorzugt fünf, ganz besonders bevorzugt sechs, insbesondere sieben und vorteilhafterweise acht oder mehr Temperatursensoren der Wandung zugeordnet.

Bevorzugt umfasst das Kochgeschirr eine Füllstanderkennungseinrichtung, welche insbesondere automatisch die Füllhöhe bzw. die Höhe, bis zu welcher die Wandung des Kochgeschirrs mit einem Lebensmittel bedeckt ist, erkennt.

Das erfindungsgemäße Kochgeschirr besitzt viele Vorteile. Insbesondere kann es in den oben aufgeführten Verfahren zum Betreiben eines Kochsystems verwendet werden, welche einem Benutzer ein besonders komfortables Erhitzen von Lebensmitteln bzw. Gargut ermöglichen.

Außerdem besteht ein erheblicher Vorteil darin, dass durch die Anordnung der Temperatursensoren im Boden sowie in der Wandung die Temperatur des Kochgeschirrs, und dadurch die Temperatur eines sich im Kochgeschirr befindlichen Lebensmittels, sehr präzise ermitteln lässt. Hierdurch wird ein Benutzer bei der Zubereitung von Speisen bzw. der Überwachung eines Erhitzungsprozesses unterstützt und/oder es ermöglicht sogar eine weitgehend automatische Steuerung des Erhitzens bzw. der Zubereitung von Gargut durch ein Ablaufprogramm.

Bevorzugt ist wenigstens ein Temperatursensor an der Außenseite der das Aufnahmevolumen begrenzenden Wandung des Kochgeschirrs angeordnet.

Insbesondere ist wenigstens ein Temperatursensor in einem Zwischenraum, welcher von einer äußeren und einer inneren Wandung gebildet wird, aufgenommen bzw. in diesen integriert.

Die erfindungsgemäße Steuereinrichtung ist zur Verwendung in einem Kochsystem und/oder in einem erfindungsgemäßen Kochgeschirr zur Durchführung eines der obigen erfindungsgemäßen Verfahren ausgebildet.

Vorzugsweise ist die Steuereinrichtung dem Kochgeschirr und/oder der Kochfeldeinrichtung zugeordnet bzw. von diesen umfasst. Sie kann aber auch separat z. B. als App vorliegen und/oder von einem Cloud-Dienst bereitgestellt werden.

Bevorzugt weist die Steuereinrichtung wenigstens eine Kommunikationseinrichtung auf, um Informationen wie insbesondere Temperaturdaten der Temperatursensoren mit dem Kochgeschirr und/oder der Kochfeldeinrichtung auszutauschen.

Besonders bevorzugt ist die Steuereinrichtung dazu geeignet und ausgebildet, die Temperaturdaten des Kochgeschirrs auszuwerten. Die Steuereinrichtung kann auch insbesondere eine Auswerteeinrichtung zur Auswertung der Temperaturdaten umfassen. Je nach Aufgabe und Ausführung bilden die Steuereinrichtung und die Auswerteeinrichtung bevorzugt eine Baugruppe.

Vorzugsweise sendet die Steuereinrichtung auf Basis der ausgewerteten Temperaturdaten, aus welche z. B. Rückschlüsse auf das Gargut in dem Kochgeschirr gezogen werden und/oder aus welchen das Erreichens eines Schwellwert ermittelt wird, geeignete Steuersignale an die Heizeinrichtung und/oder die Kochfeldeinrichtung, wodurch ein geeigneter Leistungsverlauf der Heizeinrichtung eingestellt wird.

Auch die erfindungsgemäße Steuereinrichtung weist die Vorteile des erfindungsgemäßen Kochgeschirrs und der erfindungsgemäßen Verfahren auf. Insbesondere kann es in den oben aufgeführten Verfahren verwendet werden, welche einem Benutzer ein besonders komfortables Erhitzen von Gargut ermöglichen.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine rein schematische Darstellung eines Ausführungsbeispiels eines Kochsystems zur Durchführung eines erfindungsgemäßen Verfahrens in einer perspektivischen Ansicht;
- Figur 2: eine rein schematische Darstellung eines Ausführungsbeispiels eines Kochgeschirrs in einer Schnittansicht ausgebildet zur Verwendung in einem Kochsystem zur Durchführung eines erfindungsgemäßen Verfahrens;
- Figur 3: eine rein schematische Darstellung möglicher zeitlicher Temperatur- und Leistungsverläufe während eines erfindungsgemäßen Verfahrens;
- Figur 4: eine rein schematische Darstellung eines weiteren möglichen zeitlichen Temperaturverlaufes während eines erfindungsgemäßen Verfahrens;
- Figur 5: eine rein schematische Darstellung möglicher Abhängigkeiten eines Schwellwertes;
- Figur 6: eine rein schematische Darstellung eines anderen möglichen zeitlichen Temperatur- und Leistungsverlaufes während eines erfindungsgemäßen Verfahrens; und
- Figur 7: eine rein schematische Darstellung eines möglichen Ablaufdiagramms eines erfindungsgemäßen Verfahrens.

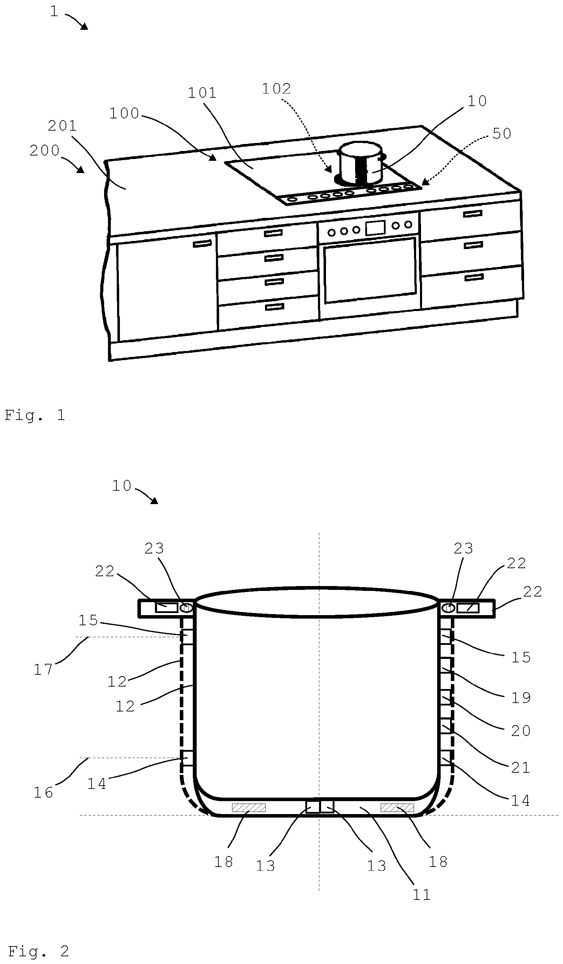

In Figur 1 ist rein schematisch ein Ausführungsbeispiel eines Kochsystems 1 zur Durchführung eines erfindungsgemäßen Verfahrens in einer perspektivischen Ansicht dargestellt. Hier umfasst das Kochsystem 1 ein erfindungsgemäßes Kochgeschirr 10, eine erfindungsgemäße Steuereinrichtung 50 und eine Kochfeldeinrichtung 100 mit Aufstellfläche 101 zum Aufstellen eines Kochgeschirrs 10 und mit einer Heizeinrichtung 102 zum Beheizen des Kochgeschirrs 10. Die Kochfeldeinrichtung 100 ist dabei in die Arbeitsfläche 201 einer Küchenzeile 200 integriert. Mit dem hier dargestellten Kochsystem 1 können die erfindungsgemäßen Verfahren wie sie zuvor beschrieben wurden durchgeführt werden.

Dazu umfasst das Kochgeschirr 10 drei bzw. mehrere in Figur 1 nicht näher dargestellte Temperatursensoren 13, 14, 15, 19, 20, 21, von welchen wenigstens einer dem Boden 11 des Kochgeschirrs 10 und wenigstens zwei weiterer der Wandung 12 des Kochgeschirrs 10 zugeordnet sind. Die an dem Boden 11 bzw. der Wandung 12 des Kochgeschirrs 10 ermittelten Temperaturen T werden in dem hier dargestellten Ausführungsbeispiel von einer in Figur 1 nicht näher dargestellte Kommunikationseinrichtung 23 des Kochgeschirrs 10 an die Steuereinrichtung 50 übermittelt.

Die Steuereinrichtung 50 ist hier in die Kochfeldeinrichtung 100 integriert. Die von der Steuereinrichtung 50 empfangen Temperaturdaten, werden hier von der Steuereinrichtung 50 bzw. einer von dieser umfassten Auswerteeinrichtung ausgewertet bzw. weiterverarbeitet. Der Auswertung entsprechend sendet hier die Steuereinrichtung 50 Steuersignale an die Kochfeldeinrichtung 100 und je nach Verfahren wird die Leistung L der Heizeinrichtung 102 anpasst.

In Figur 2 ist rein schematisch ein erfindungsgemäßes Kochgeschirr 10, welches zur Verwendung in einem Kochsystem 1 zur Durchführung eines erfindungsgemäßen Verfahrens geeignet und ausgebildet ist, in einer Schnittansicht dargestellt. Dabei ist durch die gestrichelte Linie in Figur 2 angedeutet, dass hier zwei Ausführungsbeispiele eines erfindungsgemäßen Kochgeschirrs 10 dargestellt sind.

Das Kochgeschirr 10 umfasst in beiden Ausführungsbeispielen einen Boden 11, eine Wandung 12, und wenigstens einen Griff 24, in welchem hier ein Bedienelement 22 und eine Kommunikationseinrichtung 23 aufgenommen sind. Beide Ausführungsbeispiele umfassen hier eine Füllstanderkennungseinrichtung 18, welche die Füllhöhe eines in dem Kochgeschirr 10 befindlichen Lebensmittels ermittelt, bzw. erkennt, bis zu welcher Höhe die Wandung 12 des Kochgeschirrs 10 mit einem Lebensmittel bedeckt ist. In den zwei hier schematisch dargestellten Ausführungsbeispielen weisen die Kochgeschirre 10 jeweils eine unterschiedliche Anzahl und Anordnung von Temperatursensoren 13, 14, 15, 19, 20, 21 auf.

Das auf der linken Seite der gestrichelten Linie dargestellte Ausführungsbeispiel eines erfindungsgemäßen Kochgeschirrs 10 umfasst hier einen dem Boden 11 zugeordneten Temperatursensor 13 und zwei der Wandung 12 zugeordnete Temperatursensoren 14, 15. Der dem Boden 11 zugeordnete Temperatursensor 13 ist hier in den Boden 11 integriert und die der Wandung 12 zugeordneten Temperatursensoren 14, 15 sind hier auf zwei unterschiedlichen Höhen 16, 17 an der Außenseite des Kochgeschirrs 10 aufgenommen. Auf einer untersten vorbestimmten Höhe 16 ist ein unterster Temperatursensor 14 und auf einer obersten vorbestimmten Höhe 17 ein oberster Temperatursensor 15 aufgenommen. Die der Wandung 12 zugeordneten Temperatursensoren können alternativ aber auch an der Innenseite der Wandung vorgesehen und/oder in die Wandung integriert sein.

Das auf der rechten Seite der gestrichelten Linie dargestellte Ausführungsbeispiel eines erfindungsgemäßen Kochgeschirrs 10 umfasst hier einen dem Boden 11 zugeordneten Temperatursensor 13 und fünf der Wandung 12 zugeordnete Temperatursensoren 14, 15, 19, 20, 21, welche hier in gleichmäßigen Abständen auf unterschiedlichen Höhen an der Außenseite des Kochgeschirrs 10 aufgenommen sind. Auch hier können die der Wandung 12 zugeordneten Temperatursensoren alternativ auch an der Innenseite der Wandung vorgesehen und/oder in die Wandung integriert sein.

Durch Betätigung des Bedienelementes 22, welches hier an dem Griff des Kochgeschirrs 10 aufgenommen ist, kann ein Benutzer hier eines der oben beschriebenen Verfahren auswählen und/oder starten bzw. beenden. Auch ist es hier durch ein solches Bedienelement 22 möglich, einen Temperaturwert auszuwählen auf den die Temperatur T an dem dem Boden 11 zugeordneten Temperatursensor 13 oder die Temperatur an wenigstens einem der Wandung 12 zugeordneten Temperatursensor 14, 15, 19, 20, 21, durch Einstellung einer geeigneten Leistung L der Heizeinrichtung 102 geregelt wird. Die Verfahren und/oder andere Einstellungen können je nach Ausgestaltung aber auch über Bedienelemente an der Kochfeldeinrichtung 100 oder über eine externe Bedieneinrichtung ausgewählt werden.

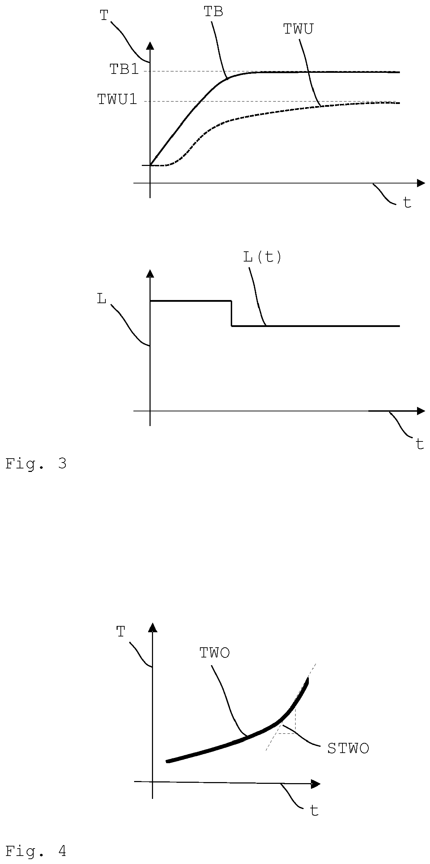

In Figur 3 sind rein schematisch mögliche zeitliche Temperaturverläufe TB, TWU am Boden 11 und am untersten der Wandung 12 zugeordneten Temperatursensor eines Kochgeschirrs 10 sowie ein möglicher dazugehörigen Leistungsverlaufe L(t) der Heizeinrichtung 102 während eines erfindungsgemäßen Verfahrens in jeweils einem separaten Diagramm dargestellt. In dem oberen Diagramm ist die Temperatur T auf der Ordinate und die Zeit t auf der Abszisse aufgetragen. In dem unteren Diagramm ist die Leistung L auf der Ordinate und die Zeit t auf der Abszisse aufgetragen.

Wird ein erfindungsgemäßes Verfahren durch Betätigung des Bedienelementes 22 gestartet, wird in dem hier gezeigten Ausführungsbeispiel während der Aufheizphase auf eine vorbestimmte Temperatur TB1 an dem wenigstens einen dem Boden zugeordneten Temperatursensor 13 geregelt, um an dem untersten der Wandung 12 zugeordnete Temperatursensor 14 eine vorbestimmte Temperatur TWU1 einzustellen. Hierzu wird, wie in dem unteren Diagramm schematisch gezeigt, ein geeigneter zeitlicher Leistungsverlauf L(t) der Heizeinrichtung 102 eingestellt.

Die Temperatur TWU1 wird hier durch den untersten Temperatursensor der Wandung 14 ermittelt, wobei die Temperatur TWU1 hier weitgehend der Temperatur T des Garguts bzw. des Lebensmittels in dem Kochgeschirr 10 entspricht. Erreicht die Temperatur an dem untersten Temperatursensor die vorbestimmte Temperatur bzw. den Temperaturwert TWU1, endet die Aufheizphase. Auf eine solche Aufheizphase folgt bei einem erfindungsgemäßen Verfahren eine Haltephase, in der eine vorbestimmte Temperatur bzw. Zieltemperatur wenigstens zeitweise weitgehend konstant gehalten wird.

In Figur 4 ist rein schematisch ein Diagramm eines weiteren möglichen zeitlichen Temperaturverlaufes während eines erfindungsgemäßen Verfahrens dargestellt. Hier ist die Temperatur T entlang der Ordinate und die Zeit t entlang der Abszisse aufgetragen. In dem hier gezeigten Diagramm steigt die Temperatur an dem obersten Temperatursensor TWO, d. h. dem in einer obersten vorbestimmten Höhe der Wandung angeordneten Temperatursensor 15, zunächst langsam und dann immer schneller an. Somit ist der hier schematisch dargestellte zeitliche Temperaturverlauf an dem obersten Temperatursensors TWO durch eine anfänglich geringe zeitliche Änderung der Temperatur gegeben, welche anschließend mit der Zeit t größer wird.

Der hier dargestellte Temperaturverlauf tritt insbesondere an Temperatursensoren 13, 14, 15, 19, 20, 21 auf, welche oberhalb der Füllhöhe des Kochgeschirrs 10 angeordnet sind und die Temperatur T des in dem Kochgeschirr 10 aufsteigenden Dampfs ermitteln. Dies ist in dem hier dargestellten Ausführungsbeispiel für den obersten Temperatursensor 15 gegeben. Steigt die Temperatur T an einem oberhalb der Füllhöhe angeordneten Temperatursensor 14, 15, 19, 20, 21 während der Aufheizphase und/oder der Haltephase schnell an, deutet dies auf ein Überkochen des in dem Kochgeschirr 10 befindlichen Lebensmittels bzw. auf die konkrete Möglichkeit/Gefahr eines Überkochens bei weiterer Leistungszufuhr hin. Wird jedoch während des hier dargestellten möglichen Temperaturverlaufes der vorbestimmte Schwellwert STW einer zeitlichen Änderung einer Temperatur am obersten Temperatursensor 15 überschritten, wird die Leistung L der Heizeinrichtung 102 reduziert. Somit kann ein Überkochen des in dem Kochgeschirr 10 befindlichen Lebensmittels weitgehend verhindert werden.

Je nach Aufgabe und Ausführung kann ein ähnlicher Temperaturverlauf wie in Figur 4 auch an Temperatursensoren 13, 14, 15, 19, 20, 21, welche unterhalb der Füllhöhe angeordnet sind d. h. auf einer Höhe 16, 17 in der die Wandung 12 des Kochgeschirrs 10 von einem Lebensmittel bedeckt ist, auftreten.

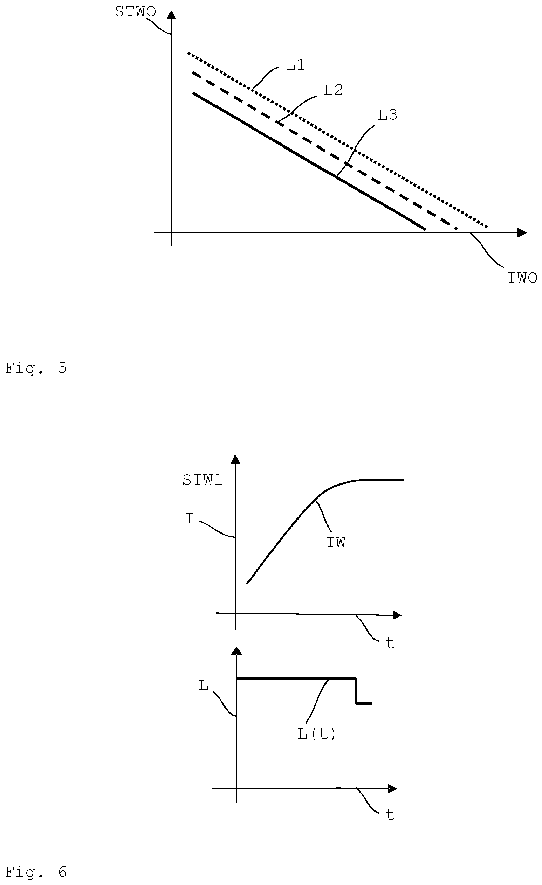

Damit ein Überkochen des in dem Kochgeschirr 10 befindlichen Lebensmittels zuverlässig verhindert wird, ist hier, wie in Figur 5 schematisch dargestellt, der Schwellwert STWO abhängig von der absoluten Temperatur TWO am obersten Temperatursensor 15 und der eingestellten momentanen Leistung L der Heizeinrichtung 102.

In Figur 5 ist rein schematisch ein Diagramm mit möglichen Abhängigkeiten eines Schwellwertes während eines erfindungsgemäßen Verfahrens dargestellt. Hier ist der vorbestimmte Schwellwert STWO einer zeitlichen Änderung der Temperatur am obersten Temperatursensor 15 entlang der Ordinate und die Temperatur TWO am obersten Temperatursensor 15 entlang der Abszisse aufgetragen.

Mit zunehmender absoluter Temperatur TWO am obersten Temperatursensor 15, ist hier ein geringerer Schwellwert STWO vorgesehen, da bei einer höheren Temperatur TWO am hier obersten Temperatursensor 15 die zeitliche Änderung der Temperatur bzw. der Temperaturanstieg, welche auf die konkrete Möglichkeit/Gefahr eines Überkochens hindeutet, geringer ausfällt. Der gegensätzliche Fall gilt hierfür niedrigere Temperaturen TWO am hier obersten Temperatursensor 15, da hier die zeitliche Änderung der Temperatur bzw. der Temperaturanstieg, welche auf die konkrete Möglichkeit/Gefahr eines Überkochens hindeutet, höher ausfällt. Somit kann hier auch noch mit einem eher großen Schwellwert STWO ein Überkochen zuverlässig verhindert und gleichzeitig das Kochgeschirr 10 bzw. ein darin befindliches Lebensmittel durch eine eher große Leistungszufuhr schnell aufgeheizt werden.

Des Weiteren ist in dem schematischen Diagramm dargestellt, dass hier mit steigender eingestellter Leistung der Heizeinrichtung L1 < L2 < L3 ein geringerer Schwellwert STWO einer zeitlichen Änderung der Temperatur am obersten Temperatursensor 15 vorgesehen ist. Eine solche Ausführung ist hier insbesondere deshalb vorteilhaft, weil bei einer eher hoch eingestellten Leistung L und somit einer eher großen Wärmezufuhr zu dem Kochgeschirr 10, die Leistung L frühzeitig reduziert werden muss, um zuverlässig ein Überkochen des Lebensmittels zu verhindern. Bei einer eher gering eingestellten Leistung L bzw. geringen Wärmezufuhr kann die Reduzierung der Leistung L bzw. die Wärmezufuhr etwas später erfolgen.

In Figur 6 ist rein schematisch ein möglicher zeitlicher Temperaturverläufe TW an einem der Wandung 12 zugeordneten Temperatursensors 14, 15, 19, 20, 21 eines Kochgeschirrs 10 sowie ein möglicher dazugehörigen Leistungsverlaufe L(t) der Heizeinrichtung 102 während eines erfindungsgemäßen Verfahrens in jeweils einem separaten Diagramm dargestellt. Im oberen Diagramm ist die Temperatur T auf der Ordinate und die Zeit t auf der Abszisse aufgetragen. Im unteren Diagramm ist die Leistung L auf der Ordinate und die Zeit t auf der Abszisse aufgetragen.

Der hier dargestellte Temperaturverlauf tritt insbesondere an Temperatursensoren 14, 15, 19, 20, 21 auf, welche oberhalb der aktuellen Füllhöhe des Kochgeschirrs 10 angeordnet sind und die Temperatur T des in dem Kochgeschirr 10 aufsteigenden Dampfs ermitteln. Dies ist in dem hier dargestellten Ausführungsbeispiel für den der Wandung 12 zugeordneten Temperatursensor 15 gegeben, welcher hier mittels der Füllstanderkennungseinrichtung 18 als der Temperatursensor mit der geringsten Höhe oberhalb der Füllhöhe des Kochgeschirrs 10 erkannt wurde.

Je nach Ausführung kann ein ähnlicher Temperaturverlauf auch, insbesondere während der Aufheizphase und/oder der Haltephase an einem Temperatursensor 13, 14, 15, 19, 20, 21 auftreten, welcher unterhalb der Füllhöhe angeordnet ist d. h. auf einer Höhe in der die Wandung 12 des Kochgeschirrs 10 von einem Lebensmittel bedeckt ist.

In dem in Figur 6 dargestellten Ausführungsbeispiel wird die Temperatur T während der Haltephase eines erfindungsgemäßen Verfahrens so geregelt, dass eine vorbestimmte Temperatur an dem der Wandung 12 zugeordneten Temperatursensor 14, 15, 19, 20 21, welcher oberhalb der Füllhöhe liegt, nicht überschritten wird.

Hierzu ist in dem hier Ausführungsbeispiel ein Schwellwert STW1 vorgesehen. Steigt die Temperatur an einem oberhalb der Füllhöhe angeordneten Temperatursensor 14, 15, 19, 20, 21 während der Haltephase über diesen Schwellwert STW1 an, deutet dies auf ein Überkochen des in dem Kochgeschirr 10 befindlichen Lebensmittels bzw. auf die konkrete Möglichkeit/Gefahr eines Überkochens bei weiterer Leistungszufuhr hin. Wird jedoch während des hier dargestellten möglichen Temperaturverlaufes der vorbestimmter Schwellwert STW1 einer Temperatur von hier 97,25°C am obersten Temperatursensor 15 überschritten, wird die Leistung L der Heizeinrichtung 102 reduziert. Somit kann ein Überkochen des in dem Kochgeschirr 10 befindlichen Lebensmittels weitgehend verhindert werden.

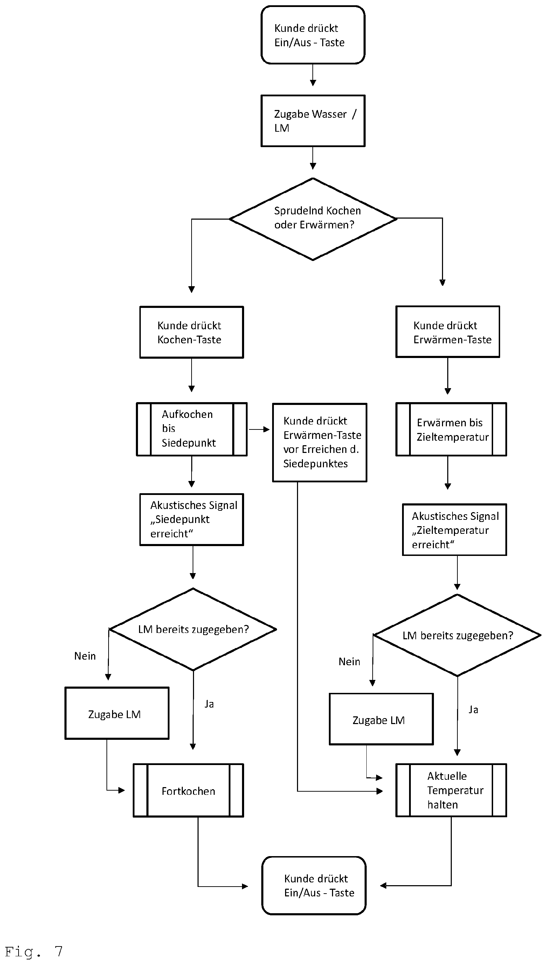

In Figur 7 ist rein schematisch ein mögliches Ablaufdiagramm, welches ein erfindungsgemäßes Verfahren einschließt, dargestellt. Zunächst schaltet ein Benutzer bzw. ein Kunde mit Hilfe des Bedienelementes 22, welches hier als Taste ausgeführt ist, das erfindungsgemäße Kochgeschirr 10 für die Verwendung in einem erfindungsgemäßen Verfahren zum Betreiben eines Kochsystems 1 frei. Anschließend gibt hier ein Benutzer bzw. Kunde Wasser in das Kochgeschirr 10 und wählt zwischen den Funktionen "Kochen" und "Erwärmen" aus, welche einem Benutzer ein komfortables Kochen und/oder Erwärmen eines Lebensmittels in dem Kochgeschirr 10 ermöglichen.

Wird hier die Funktion "Kochen" ausgewählt bzw. ein entsprechendes Bedienelement 22 oder eine entsprechende Taste gedrückt, startet hier die Aufheizphase in der das erfindungsgemäße Kochgeschirr 10 durch einen geeigneten Leistungsverlauf L(t) der Heizeinrichtung 102 auf eine vorbestimmte Temperatur geregelt wird, wobei hier die vorbestimmte Temperatur etwa der Siedetemperatur von Wasser entspricht und hier an dem untersten der Wandung 12 zugeordneten Temperatursensor 14 ermittelt wird.

In einer solchen Aufheizphase wird, einem erfindungsgemäßen Verfahren nach, die Temperatur des in dem Kochgeschirr aufsteigenden Dampfes von einem Temperatursensor oberhalb der Füllhöhe ermittelt. Übersteigt die Temperatur an diesem Temperatursensor einen Schwellwert von hier 97,25°C, wird die Leistung der Heizeinrichtung reduziert, um ein Überkochen zu verhindern.

Drückt hier ein Benutzer während der Aufheizphase und vor Erreichen der Zieltemperatur ein Bedienelement, welches der Funktion "Erwärmen" zugeordnet ist, wird hier die momentane Temperatur als neue Zieltemperatur gesetzt, die Aufheizphase abgebrochen bzw. beendet und direkt in die Haltephase übergegangen bzw. diese ausgeführt.

Bei Erreichen der Zieltemperatur bzw. der vorbestimmten Temperatur ist die Aufheizphase beendet und es ertönt hier ein akustisches Signal. Nun startet hier die Haltephase in der die Temperatur des Lebensmittels, ermittelt am untersten Temperatursensor 14, weitgehend konstant gehalten wird. Ein Benutzer kann hier nun ein weiteres Lebensmittel zu dem erwärmten Wasser zu geben.

Während der Haltephase wird hier die zeitliche Änderung der Temperatur an dem obersten Temperatursensor 15, welcher oberhalb der Füllhöhe angeordnet ist, fortlaufend ermittelt. Wird am obersten Temperatursensor 15 ein vorbestimmter Schwellwert STWO der zeitliche Änderung der Temperatur überschritten, wird hier die Leistung L der Heizeinrichtung 102 reduziert, um ein Überkochen zu verhindern.

Durch das Drücken des Bedienelementes 22 bzw. einer Taste wird hier die Funktion "Kochen" beendet.

Für den Fall, dass anstatt der Funktion "Kochen" die Funktion "Erwärmen" von einem Benutzer durch Betätigung eines Bedienelementes 22 am Kochgeschirr, hier einer Taste, ausgewählt wird, erfolgt hier ein Ablauf, welcher ähnlich zu dem oben beschriebenen Verfahren für die Auswahl "Kochen" ist. Für die Funktion "Erwärmen", entspricht die Zieltemperatur dann jedoch z. B. einer Temperatur des Lebensmittels von etwa 80°C.

### Bezugszeichenliste

- 1: Kochsystem
- 10: Kochgeschirr
- 11: Boden
- 12: Wandung
- 13: Temperatursensor
- 14: Temperatursensor
- 15: Temperatursensor
- 16: Höhe
- 17: Höhe
- 18: Füllstanderkennungseinrichtung
- 19: Temperatursensor
- 20: Temperatursensor
- 21: Temperatursensor
- 22: Bedienelement
- 23: Kommunikationseinrichtung
- 24: Griff
- 50: Steuereinrichtung
- 100: Kochfeldeinrichtung
- 101: Aufstellfläche
- 102: Heizeinrichtung
- 200: Küchenzeile
- 201: Arbeitsfläche
- T: Temperatur
- TB: Temperatur am Boden
- TB1: (bestimmte) Temperatur am Boden
- TW: Temperatur
- TWU: Temperatur
- TWU1: Temperatur
- TWO: Temperatur
- L: Leistung
- STW: Schwellwert
- STWO: Schwellwert
- t: Zeit

## Patentansprüche

1. Verfahren zum Betreiben eines Kochsystems (1) umfassend wenigstens ein Kochgeschirr (10), wenigstens eine Steuereinrichtung (50) und wenigstens eine Kochfeldeinrichtung (100), wobei die Kochfeldeinrichtung (100) wenigstens eine Aufstellfläche (101) zum Aufstellen von Kochgeschirr (10) und wenigstens eine Heizeinrichtung (102) zum Beheizen von Kochgeschirr (10) umfasst, wobei das Kochgeschirr (10) wenigstens einen Boden (11) und wenigstens eine Wandung (12) umfasst, wobei durch den Boden (11) und die Wandung (12) wenigstens ein Aufnahmevolumen begrenzt wird, wobei wenigstens ein Temperatursensor (13) dem Boden (11) zugeordnet ist und wenigstens zwei weitere Temperatursensoren (14, 15, 19, 20, 21) der Wandung (12) zugeordnet sind, wobei ein erster der Wandung (12) zugeordneter Temperatursensor (14) in einer untersten vorbestimmten Höhe (16) als unterster Temperatursensor (14) und ein zweiter der Wandung (12) zugeordneter Temperatursensor (15) in einer obersten vorbestimmten Höhe (17) als oberster Temperatursensor (15) vorgesehen ist,
**gekennzeichnet durch** die folgenden Schritte in geeigneter Anzahl und Reihenfolge:
- Beheizen des Kochgeschirrs (10) durch einen Leistungsverlauf der Heizeinrichtung (102), wobei auf eine vorbestimmte Temperatur (TB1) an dem wenigstens einen dem Boden zugeordneten Temperatursensor (13) geregelt wird, um an dem untersten der Wandung (12) zugeordnete Temperatursensor (14) eine vorbestimmte Temperatur (TWU1) zu erreichen;
- reduzieren der Leistung (L) der Heizeinrichtung (102), wenn ein vorbestimmter Schwellwert (STW) einer Temperatur (TW) an wenigstens einem der Wandung zugeordneten Temperatursensor (14, 15) überschritten wird.

2. Verfahren nach dem vorhergehenden Anspruch, **dadurch gekennzeichnet, dass** die Leistung (L) der Heizeinrichtung (102) reduziert wird, wenn der vorbestimmte Schwellwert (STW) einer Temperatur (TW) an wenigstens einem der Wandung (12) zugeordneten Temperatursensor (14, 15, 19, 20, 21) überschritten wird, welcher die Temperatur des in dem Kochgeschirr (10) aufsteigenden Dampfes misst.

3. Verfahren nach einem der vorhergehenden Ansprüche, **dadurch gekennzeichnet, dass** wenigstens eine Füllstanderkennungseinrichtung (18) vorgesehen ist, welche automatisch die Füllhöhe des Kochgeschirrs (10) erkennt.

4. Verfahren zum Betreiben eines Kochsystems (1) umfassend wenigstens ein Kochgeschirr (10), wenigstens eine Steuereinrichtung (50) und wenigstens eine Kochfeldeinrichtung (100), wobei die Kochfeldeinrichtung (100) wenigstens eine Aufstellfläche (101) zum Aufstellen von Kochgeschirr (10) und wenigstens eine Heizeinrichtung (102) zum Beheizen von Kochgeschirr (10) umfasst, wobei das Kochgeschirr (10) wenigstens einen Boden (11) und wenigstens eine Wandung (12) umfasst, wobei durch den Boden (11) und die Wandung (12) wenigstens ein Aufnahmevolumen begrenzt wird, wobei wenigstens ein Temperatursensor (13) dem Boden (11) zugeordnet ist und wenigstens zwei weiterer Temperatursensoren (14, 15, 19, 20, 21) der Wandung (12) zugeordnet sind, wobei ein erster der Wandung (12) zugeordneter Temperatursensor (14) in einer untersten vorbestimmten Höhe (16) als unterster Temperatursensor (14) und ein zweiter der Wandung (12) zugeordneter Temperatursensor (15) in einer obersten vorbestimmten Höhe (17) als oberster Temperatursensor (15) vorgesehen ist,
**gekennzeichnet durch**
wenigstens eine Aufheizphase, in der durch einen geeigneten Leistungsverlauf der Heizeinrichtung (102) auf eine vorbestimmte Temperatur (T) an wenigstens einem Temperatursensor (13, 14, 15, 19, 20, 21) eingestellt wird, und wenigstens eine Haltephase, in der diese vorbestimmte Temperatur (T) wenigstens zeitweise im Wesentlichen konstant gehalten wird, wobei zur Regelung der Leistung (L) der Heizeinrichtung (102) während der Aufheiz- und der Haltephase wenigstens zeitweise eine Temperatur (TB, TW) genutzt wird, welche von dem wenigstens einen dem Boden (11) zugeordneten Temperatursensor (13) und/oder wenigstens einer der der Wand (12) zugeordneten Temperatursensoren (14, 15, 19, 20, 21) gemessen wird.

5. Verfahren nach dem vorhergehenden Anspruch 4, **dadurch gekennzeichnet, dass** während der Aufheizphase auf eine vorbestimmte Temperatur (TB1) an dem wenigstens einen dem Boden (11) zugeordneten Temperatursensor (13) geregelt wird.

6. Verfahren nach einem der beiden vorhergehenden Ansprüche 4 und 5, **dadurch gekennzeichnet, dass** während der Aufheizphase auf eine vorbestimmten Temperatur (TB1) an dem dem Boden (11) zugeordneten Temperatursensor (13) geregelt wird, bis an dem untersten der Wandung (12) zugeordnete Temperatursensor (14) eine vorbestimmte Temperatur (TW) erreicht wird.

7. Verfahren nach einem der vorhergehenden Ansprüche 4 bis 6, **dadurch gekennzeichnet, dass** während der Aufheizphase eine vorbestimmte Temperatur (TWU1) an dem untersten der Wandung (11) zugeordneten Temperatursensor (14) eingestellt wird.

8. Verfahren nach einem der vorhergehenden Ansprüche 4 bis 7, **dadurch gekennzeichnet, dass** während der Haltephase wenigstens zeitweise eine vorbestimmte Temperatur (TWU1) an dem untersten der Wandung (12) zugeordneten Temperatursensor (14) im Wesentlichen konstant gehalten wird.

9. Verfahren nach einem der vorhergehenden Ansprüche 4 bis 8, **dadurch gekennzeichnet, dass** während der Haltephase die Leistung (L) der Heizeinrichtung (102) reduziert wird, wenn ein vorbestimmter Schwellwert (STWO) einer zeitlichen Änderung der Temperatur (TWO) an dem obersten der Wandung (12) zugeordneten Temperatursensor (15) überschritten wird.

10. Verfahren nach einem der vorhergehenden Ansprüche 4 bis 9, **dadurch gekennzeichnet, dass** der Schwellwert (STWO) abhängig von der Leistung (L) der Heizeinrichtung (102) und/oder der Temperatur (TWO) an dem obersten der Wandung (12) zugeordneten Temperatursensor (15) und/oder der Temperatur (TWU) an dem untersten der Wandung (12) zugeordneten Temperatursensor (14) ist.

11. Verfahren nach einem der vorhergehenden Ansprüche, **dadurch gekennzeichnet, dass** mehr als zwei der Wandung (12) des Kochgeschirrs (10) zugeordneten Temperatursensoren (14, 15, 19, 20, 21) vorgesehen sind an denen eine Temperatur (TW) gemessen wird.

12. Verfahren nach einem der vorhergehenden Ansprüche, **dadurch gekennzeichnet, dass** die Leistung (L) der Heizeinrichtung (102) durch einen Leistungsgrenzwert auf eine maximale Leistung (L) begrenzt wird.

13. Verfahren nach einem der vorhergehenden Ansprüche, **dadurch gekennzeichnet, dass** die Heizeinrichtung (102) abgeschaltet wird, wenn die Temperatur (TB) an wenigstens einem dem Boden (11) zugeordneten Temperatursensor (13) einen Grenzwertwert überschreitet.

14. Verfahren nach einem der vorhergehenden Ansprüche, **dadurch gekennzeichnet, dass** durch Betätigung wenigstens eines am Kochgeschirr (10) aufgenommenen Bedienelementes (22) das Verfahren gestartet und/oder beendet wird.

15. Verfahren nach einem der vorhergehenden Ansprüche, **dadurch gekennzeichnet, dass** eine gewünschte Zieltemperatur für ein sich im Kochgeschirr (10) befindliches Lebensmittel ausgewählt wird.

16. Kochgeschirr (10) umfassend wenigstens einen Boden (11) und wenigstens eine Wandung (12) umfasst, wobei durch den Boden (11) und die Wandung (12) wenigstens ein Aufnahmevolumen begrenzt wird, wobei wenigstens ein Temperatursensor (13) dem Boden (11) zugeordnet ist und wenigstens zwei weiterer Temperatursensoren (14, 15, 19, 20, 21) der Wandung (12) zugeordnet sind, wobei ein erster der Wandung (12) zugeordnete Temperatursensor (14) in einer untersten vorbestimmten Höhe (16) als unterster Temperatursensor (14) und ein zweiter der Wandung (12) zugeordnete Temperatursensor (15) in einer obersten vorbestimmten Höhe (17) als oberster Temperatursensor (15) vorgesehen ist, **gekennzeichnet durch** eine Steuereinrichtung (50) und/oder eine Wirkverbindung zu einer Steuereinrichtung (50), welche zur Durchführung eines Verfahrens nach einem der vorhergehenden Ansprüche geeignet und ausgebildet ist.

17. Kochgeschirr (10) nach dem vorhergehenden Anspruch, **dadurch gekennzeichnet, dass** wenigstens ein Temperatursensor (13, 14, 15, 19, 20, 21) an der Außenseite der das Aufnahmevolumen begrenzenden Wandung des Kochgeschirrs (10) angeordnet ist.

18. Steuereinrichtung (50) geeignet und ausgebildet zur Verwendung in einem Kochsystem (1) und/oder einem Kochgeschirr (10) zur Durchführung eines Verfahrens nach einem der vorhergehenden Ansprüche.
